(19) Europäisches Patentamt / European Patent Office / Office européen des brevets

(11) **EP 4 482 022 A1**

(12) **EUROPEAN PATENT APPLICATION**
published in accordance with Art. 153(4) EPC

(43) Date of publication:
**25.12.2024  Bulletin 2024/52**

(21) Application number: **23779270.0**

(22) Date of filing: **06.03.2023**

(51) International Patent Classification (IPC):
*H02P 23/14* (2006.01)

(52) Cooperative Patent Classification (CPC):
**H02P 23/14**

(86) International application number:
**PCT/JP2023/008342**

(87) International publication number:
**WO 2023/189241 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **01.04.2022   JP 2022062017**

(71) Applicant: **OMRON Corporation
Kyoto-shi, Kyoto 600-8530 (JP)**

(72) Inventors:
• **KAIDA, Sota
Kyoto-shi, Kyoto 600-8530 (JP)**
• **ONO, Yasushi
Kyoto-shi, Kyoto 600-8530 (JP)**

(74) Representative: **Isarpatent
Patent- und Rechtsanwälte
Barth Hassa Peckmann & Partner mbB
Friedrichstraße 31
80801 München (DE)**

(54) **CONTROL DEVICE**

(57)    The present control device controls a three-phase AC motor including an encoder configured to output a feedback signal, a U-phase coil, a V-phase coil, and a W-phase coil, and the control device includes a first acquisition unit configured to acquire information related to back electromotive forces generated in the U-phase coil, the V-phase coil, and the W-phase coil due to the output shaft being rotated in a desired direction by an external force, a second acquisition unit configured to acquire, from the encoder, the feedback signal including information related to rotation of the output shaft rotated by the external force, and a control unit configured to estimate information related to control of the three-phase AC motor based on the information related to the back electromotive forces and the feedback signal and to control the three-phase AC motor by using the estimated information related to control of the three-phase AC motor.

FIG. 7

SERVO DRIVER    2

FIRST RECEPTION UNIT    11

SECOND RECEPTION UNIT    12

ESTIMATION UNIT    13

SETTING UNIT    14

CONTROL UNIT    15

STORAGE UNIT    16

EP 4 482 022 A1

**Description**

TECHNICAL FIELD

The present invention relates to a control device.

BACKGROUND ART

A motor including a servo driver that performs servo control by receiving a feedback signal from a motor and an encoder that detects a rotation state of a motor shaft is used (for example, refer to Patent Documents 1 to 3).

CITATION LIST

PATENT LITERATURE

Patent Document 1: JP 2018-061327 A
Patent Document 2: JP 2018-191422 A
Patent Document 3: JP 2010-057302 A

SUMMARY OF INVENTION

TECHNICAL PROBLEM

In a servo system, information related to motor control such as an arrangement order of three-phase coils disposed in an associated three-phase AC motor and information related to an encoder included in the three-phase AC motor is set in a servo driver. Then, the servo driver controls the three-phase AC motor by using the set information related to the motor control. Since the information related to the motor control is different for each model of the three-phase AC motor, it takes time to confirm the information related to the motor control by a manual or the like before the operation of the servo system and set the information in the servo driver.

An object of one aspect of the disclosed technique is to provide a control device that can acquire information related to control of the three-phase AC motor by a simpler method.

SOLUTION TO PROBLEM

One aspect of the disclosed technique is exemplified by the following control device. The present control device is a control device that controls a three-phase AC motor including an encoder that outputs a feedback signal indicating a rotation state of an output shaft, a U-phase coil, a V-phase coil, and a W-phase coil. The control device includes a first acquisition unit configured to acquire information related to back electromotive forces generated in the U-phase coil, the V-phase coil, and the W-phase coil due to the output shaft being rotating in a desired direction by an external force, a second acquisition unit configured to acquire, from the encoder, the feedback signal including information related to rotation of the output shaft rotated by the external force, and a control unit configured to estimate information related to control of the three-phase AC motor based on the information related to the back electromotive forces and the feedback signal and control the three-phase AC motor by using the estimated information related to control of the three-phase AC motor.

When the output shaft is rotated in a desired direction by an external force, back electromotive forces are generated in the U-phase coil, the V-phase coil and the W-phase coil, and a current caused by each of the back electromotive forces flows to the control device. When the output shaft is rotated in the desired direction by the external force, a feedback signal indicating the rotation is output to the control device. The control device estimates information related to control of the three-phase AC motor based on information related to the back electromotive forces generated in the U-phase coil, the V-phase coil, and the W-phase coil and the feedback signal, uses the estimated information related to control of the three-phase AC motor, and thus can control the three-phase AC motor. That is, the control device can set information related to the motor by a simple operation of rotating the output shaft in the desired direction by an external force.

The control device may have the following feature. The control unit estimates the arrangement order of the U-phase coil, the V-phase coil, and the W-phase coil based on the information related to the back electromotive forces, and controls the three-phase AC motor by using the estimated arrangement order of the U-phase coil, the V-phase coil, and the W-phase coil. The control device having such a feature can supply currents to the U-phase coil, the V-phase coil, and the W-phase coil and can drive the three-phase AC motor by using the estimated arrangement order.

The control device may have the following feature. The information related to the back electromotive forces includes a first correspondence relationship between a voltage and an electrical angle between any two phases of a U-phase, a V-phase, and a W-phase. The control unit acquires a positive or negative of a rate of a change in the voltage between the two phases when the voltage between the two phases is 0 in the first correspondence relationship and a first electrical angle when the voltage between the two phases is 0, determines an offset for correcting a deviation between an electrical angle of the three-phase AC motor and an origin of the encoder based on a second correspondence relationship between a voltage and an electrical angle of each of the U-phase, the V-phase, and the W-phase stored in advance in the storage unit, the positive or negative of the rate of the change in the voltage and the first electrical angle acquired, and the estimated arrangement order of the U-phase coil, the V-phase coil, and the W-phase coil, and controls the three-phase AC motor by also using the determined offset. With such a feature, even when a deviation occurs between the origin of the encoder and 0 degrees of the electrical angle of the motor, the control device can correct the deviation and control the three-phase AC motor. The offset may be determined using a current value instead of the voltage.

The control device may have the following feature. The information related to control of the three-phase AC motor includes a parameter indicating a rotational direction of the output shaft notified through the feedback signal. The control unit controls the three-phase AC motor by causing the storage unit to store first information when the output shaft is rotated in the desired direction, and the parameter indicating the rotational direction of the output shaft notified through the feedback signal indicates a negative direction, and determining that the output shaft is rotated in a direction opposite to the rotational direction of the output shaft notified through the feedback signal when the first information is stored in the storage unit. With such a feature, the control device can control the three-phase AC motor with a desired direction as a positive direction.

ADVANTAGEOUS EFFECTS OF INVENTION

According to the disclosed technique, information related to control of the three-phase AC motor can be acquired by a simpler method.

BRIEF DESCRIPTION OF DRAWINGS

FIG. 1 is a diagram illustrating a servo system according to an embodiment. FIG. 2 is a first diagram schematically illustrating an arrangement order of a U-phase, a V-phase, and a W-phase and a count-up direction of an encoder when a motor 3 is viewed from an axial direction of an output shaft.

FIG. 3 is a second diagram schematically illustrating the arrangement order of the U-phase, the V-phase, and the W-phase and the count-up direction of the encoder when the motor 3 is viewed from the axial direction of the output shaft.

FIG. 4 is a third diagram schematically illustrating the arrangement order of the U-phase, the V-phase, and the W-phase and the count-up direction of the encoder when the motor 3 is viewed from the axial direction of the output shaft.

FIG. 5 is a fourth diagram schematically illustrating the arrangement order of the U-phase, the V-phase, and the W-phase and the count-up direction of the encoder when the motor 3 is viewed from the axial direction of the output shaft.

FIG. 6 is a diagram illustrating a state in which the output shaft of the motor is rotated by hand.

FIG. 7 is a diagram illustrating a schematic configuration of functional units included in a servo driver according to the present embodiment.

FIG. 8 is a diagram showing a back electromotive force generated by the output shaft being rotated by hand.

FIG. 9 is a diagram showing an electrical angular velocity by the output shaft being rotated by hand.

FIG. 10 is a diagram schematically illustrating measurement of a voltage input via a power line from the motor whose output shaft is rotated by hand.

FIG. 11 is a diagram showing a time-series change in a measurement line voltage.

FIG. 12 is a first diagram showing a correspondence relationship between the measurement line voltage and an electrical angle recognized by a servo driver 2.

FIG. 13 is a second diagram showing the correspondence relationship between the measurement line voltage and the electrical angle recognized by the servo driver 2.

FIG. 14 is a diagram showing a correspondence relationship between a three-phase voltage measured from a neutral point and an electrical angle.

FIG. 15 is a diagram illustrating an example of processing flow of processing of estimating a count-up direction of an encoder by an estimation unit.

FIG. 16 is a diagram illustrating an example of processing flow of processing of estimating an offset of the encoder by the estimation unit.

FIG. 17 is a diagram schematically illustrating measurement of a current input via a power line from a motor whose output shaft is rotated by hand.

FIG. 18 is a diagram showing current values generated when the electrical angular velocity illustrated in FIG. 9 is supplied.

DESCRIPTION OF EMBODIMENTS

< Embodiments >

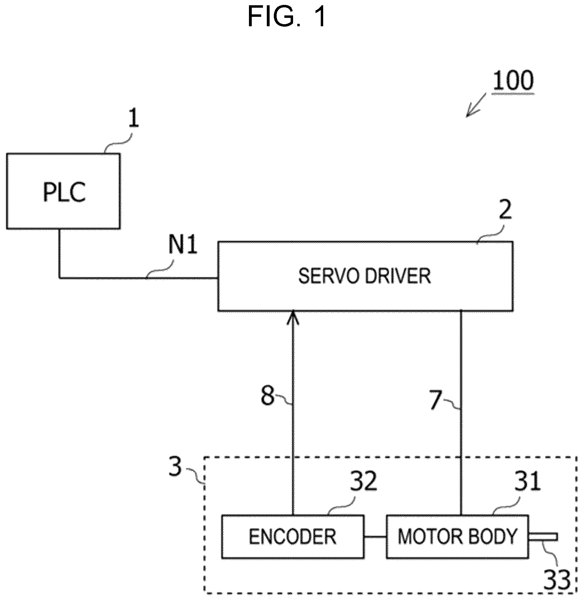

An embodiment will be described below with reference to the drawings. FIG. 1 is a diagram illustrating a servo system 100 according to the embodiment. The servo system 100 includes a PLC 1, a servo driver 2, a motor 3, and an industrial network N1. The motor 3 includes a motor body 31, an encoder 32, and an output shaft 33. The PLC 1 and the servo driver 2 are connected to each other by the industrial network N1. The servo driver 2 and the motor body 31 are connected to each other by a power line 7. The servo driver 2 and the encoder 32 are connected to each other by an encoder cable 8.

The PLC 1 outputs a command signal to the servo driver 2 via the industrial network N1. The PLC 1 functions as, for example, a monitoring device of the servo driver 2 by performing processing according to a prepared program. The industrial network N1 is, for example, a TCP/IP network.

The servo driver 2 receives a command signal from the PLC 1 via the industrial network N1. The servo driver 2 receives a feedback signal from the encoder 32 of the corresponding motor 3 via the encoder cable 8. The servo driver 2 supplies a drive current to the motor body 31 of the motor 3 via the power line 7. In the servo driver 2, a servo system that performs feedback control using a speed detector, a torque detector, a power generator, and the like are formed. These signals are used to servo control and drive the motor 3. The servo driver 2 is an example of a "control device".

The motor 3 is, for example, a three-phase AC servo motor. The motor 3 includes the motor body 31 and the encoder 32. The motor body 31 receives a drive current from the servo driver 2 via the power line 7. The encoder 32 detects an operation of the motor body 31 by the servo driver 2 and generates a feedback signal indicating the detected operation. The feedback signal is output to the servo driver 2 via the encoder cable 8. The feedback signal includes information related to displacement of the output shaft 33, such as information relating to a rotational position (angle) of the output shaft 33 of the motor body 31, information relating to a rotational speed of the output shaft 33, and information relating to a rotation direction of the output shaft 33, for example. For example, known incremental-type signal generation unit or absolute-type signal generation unit can be used as the configuration of the encoder 32. The motor 3 is an example of a "three-phase AC motor".

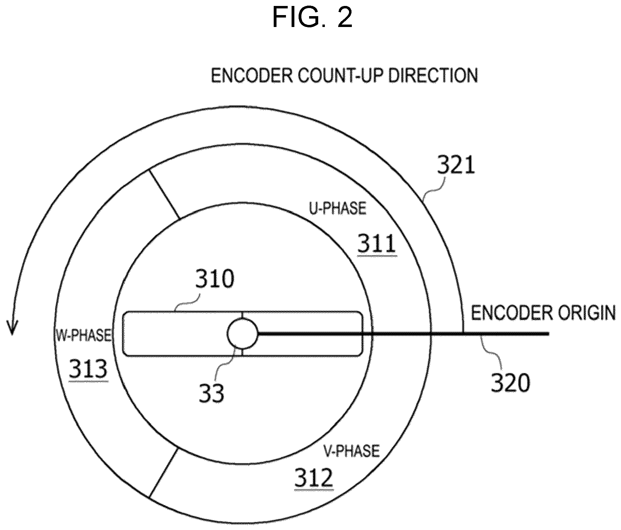

FIGS. 2 to 5 are diagrams each schematically illustrating an arrangement order of a U-phase, a V-phase, and a W-phase and a count-up direction of the encoder 32 when the motor 3 is viewed from the axial direction of the output shaft 33. In FIGS. 2 to 5, an origin position when the encoder 32 counts the number of rotations of the encoder 32 is also illustrated.

In the motor 3, a U-phase coil 311, a V-phase coil 312, and a W-phase coil 313 are arranged so as to surround a rotor 310 to which the output shaft 33 is attached. The encoder 32 determines that the rotation direction is a positive direction when the output shaft 33 rotates in the direction of the output shaft 331. The encoder 32 counts an amount of rotation of the output shaft 33 with reference to an encoder origin 320.

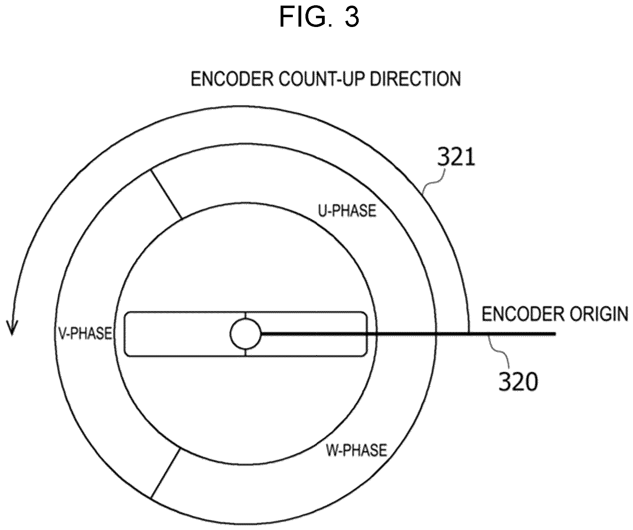

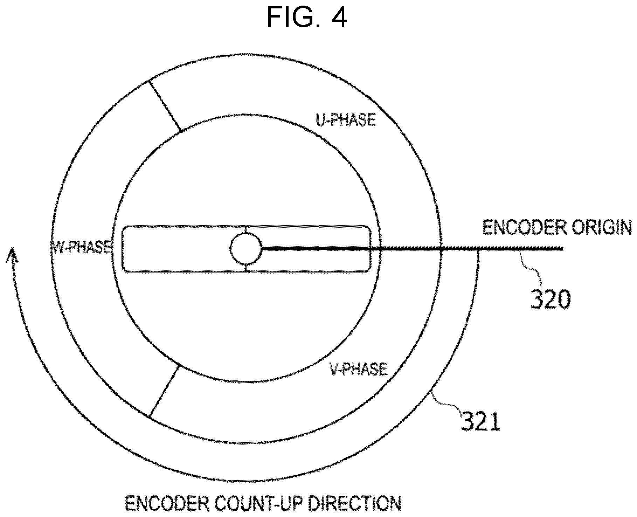

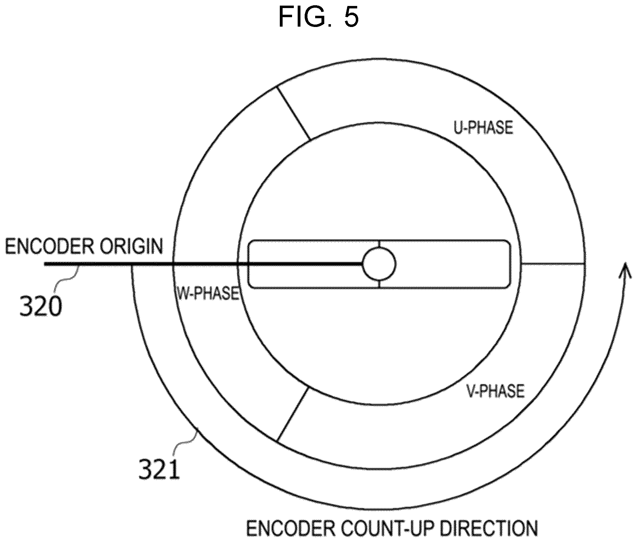

Here, when FIGS. 2 and 3 are compared, the arrangement orders of the V-phase coil 312 and the W-phase coil 313 are reversed. When FIGS. 2 and 4 are compared, encoder count-up directions 321 are reversed. When FIGS. 2 and 5 are compared, positions of the encoder origin 320 are different from each other. As described above, in the motor 3, the arrangement order of the U-phase coil 311, the V-phase coil 312, and the W-phase coil 313, the position of the encoder origin 320, and the encoder count-up direction 321 may be different for each model of the motor 3. Thus, in order to appropriately perform servo control of the motor 3 by the servo driver 2, the arrangement order of the U-phase coil 311, the V-phase coil 312, and the W-phase coil 313, the position of the encoder origin 320, and the encoder count-up direction 321 are preset with respect to the servo driver 2.

In the present embodiment, by using the back electromotive force generated by rotating the output shaft 33 by hand in a direction desired to be set as the positive direction by a user of the servo system 100 and the feedback signal from the encoder 32, information on the arrangement order of the U-phase coil 311, the V-phase coil 312, and the W-phase coil 313, the position of the encoder origin 320, and the encoder count-up direction 321 are acquired, and the acquired information is set in the servo driver 2. The direction desired to be set as the positive direction by the user is an example of a "desired direction".

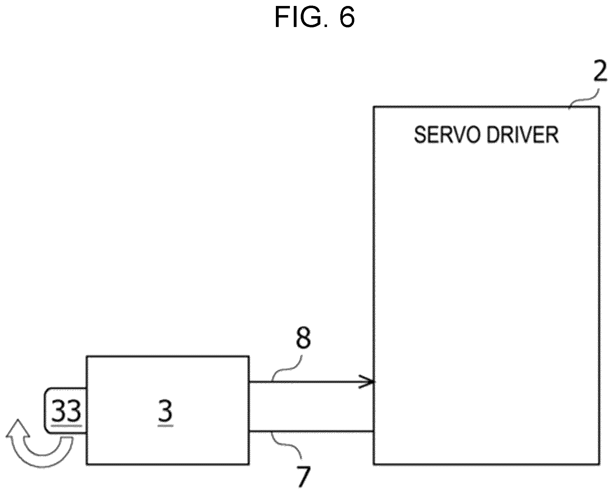

FIG. 6 is a view illustrating a state in which the output shaft 33 of the motor 3 is rotated by hand. In the example of FIG. 6, the output shaft 33 is rotated in a counterclockwise direction when facing the output shaft 33. The back electromotive force generated by rotating the output shaft 33 is input to the servo driver 2 via the power line 7. The feedback signal from the encoder 32 that detects the rotation of the output shaft 33 is input to the servo driver 2 via the encoder cable 8.

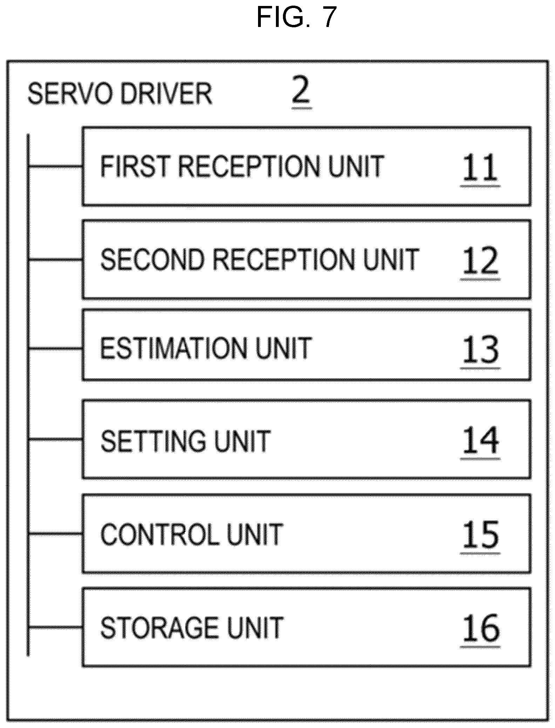

FIG. 7 is a diagram illustrating a schematic configuration of functional units included in the servo driver 2 according to the present embodiment. The servo driver 2 can be regarded as a computer including an arithmetic device and a storage device. The functional units illustrated in FIG. 7 are implemented by a predetermined program or the like being executed at the servo driver 2. The servo driver 2 includes a first reception unit 11, a second reception unit 12, an estimation unit 13, a setting unit 14, a control unit 15, and a storage unit 16, and may include functional units other than these units.

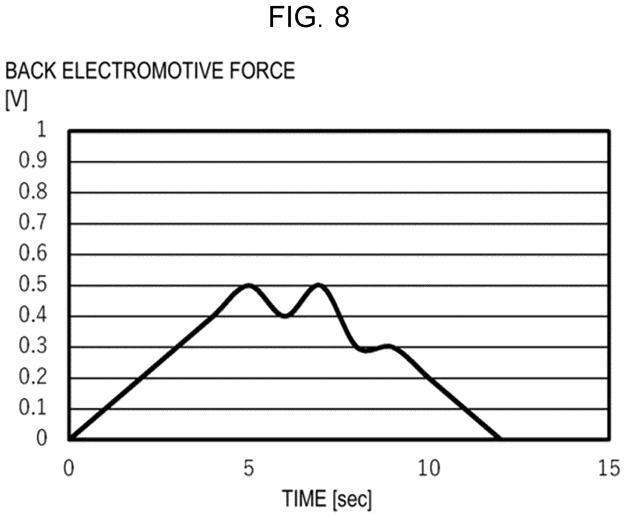

The first reception unit 11 acquires a back electromotive force from the motor body 31 via the power line 7. As described with reference to FIG. 6, when the output shaft 33 is rotated by hand, the back electromotive force is generated. FIG. 8 is a diagram showing the back electromotive force generated by the output shaft 33 being rotated by hand. In FIG. 8, the vertical axis represents the back electromotive force, and the horizontal axis represents time. When the output shaft 33 is rotated by hand, the back electromotive force corresponding to the rotational speed of the output shaft 33 is generated in the U-phase coil 311, the V-phase coil 312, and the W-phase coil 313. The first reception unit 11 causes the storage unit 16 to store a time-series change in the received back electromotive force generated in each of the U-phase coil 311, the V-phase coil 312, and the W-phase coil 313. The first reception unit 11 is an example of a "first acquisition unit". The time-series change in the back electromotive force is an example of "information related to the back electromotive force".

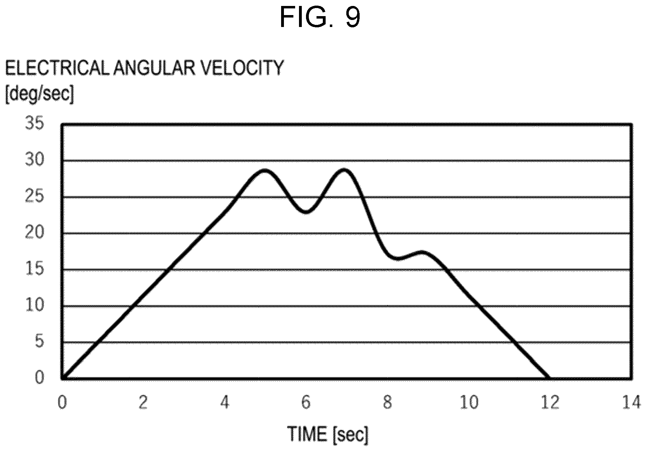

Referring back to FIG. 7, the second reception unit 12 acquires the feedback signal from the encoder 32 via the encoder cable 8. FIG. 9 is a diagram showing an electrical angular velocity by the output shaft 33 being rotated by hand. In FIG. 9, the vertical axis represents electrical angular velocity (degree/second), and the horizontal axis represents time (second). When the output shaft 33 is rotated by hand, the rotation direction and the rotation speed of the output shaft 33 are detected by the encoder 32. The encoder 32 outputs the feedback signal including information indicating the detected rotation direction and rotation speed of the output shaft 33 to the servo driver 2. The second reception unit 12 causes the storage unit 16 to store the time-series change in the rotation speed of the output shaft 33 indicated by the received feedback signal. The second reception unit 12 is an example of a "second acquisition unit".

Referring back to FIG. 7, the estimation unit 13 estimates the arrangement order of the U-phase coil 311, the V-phase coil 312, and the W-phase coil 313, an encoder offset for correcting a deviation between an electrical angle of the motor 3 and the origin of the encoder 32 (in other words, a deviation between a dq-axis of the servo driver 2 and a dq-axis of the motor 3), and a direction in which the output shaft 33 counts up the number of rotations based on the information stored in the storage unit 16 by the first reception unit 11 and the second reception unit 12. The estimation unit 13 is an example of a "control unit". The encoder offset is an example of an "offset".

The estimation unit 13 estimates the arrangement order of the U-phase coil 311, the V-phase coil 312, and the W-phase coil 313 based on, for example, the order in which the back electromotive force is generated. The estimation unit 13 estimates a count-up direction of the encoder 32 based on, for example, a positive or negative of the rotation speed of the output shaft 33 indicated by the feedback signal.

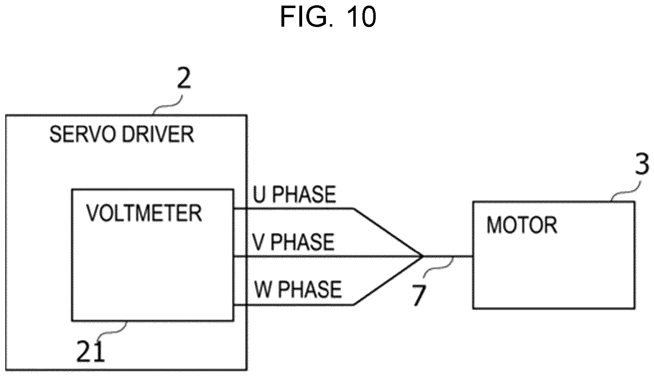

An example of processing of estimating the arrangement order of the U-phase coil 311, the V-phase coil 312, and the W-phase coil 313 by using the back electromotive forces will be described below. FIG. 10 is a diagram schematically illustrating measurement of a voltage input via the power line 7 from the motor 3 whose output shaft 33 is rotated by hand. The servo driver 2 includes a voltmeter 21, and the voltage input from the motor 3 is measured by the voltmeter 21. The following equation (1) is established, where $\omega$ is an electrical angular velocity, $L_d$ and $L_q$ are two phase inductances, R is a phase resistance, $K_e$ is an induced voltage constant, $i_d$ is a d-axis current, $i_q$ is a q-axis current, and p is a differential operator.

[Equation 1]

$$\begin{bmatrix} V_d \\ V_q \end{bmatrix} = \begin{bmatrix} R + pL_d & -\omega L_q \\ \omega L_d & R + pL_q \end{bmatrix} \begin{bmatrix} i_d \\ i_q \end{bmatrix} + \begin{bmatrix} 0 \\ \omega K_e \end{bmatrix} \quad \cdot \cdot \cdot \text{EQUATION (1)}$$

Since the current state is a servo-off state, $i_d = 0$ and $i_q = 0$, and thus the following equation (2) is established.

[Equation 2]

$$\begin{bmatrix} V_d \\ V_q \end{bmatrix} = \begin{bmatrix} 0 \\ \omega K_e \end{bmatrix} \quad \cdot \cdot \cdot \text{EQUATION (2)}$$

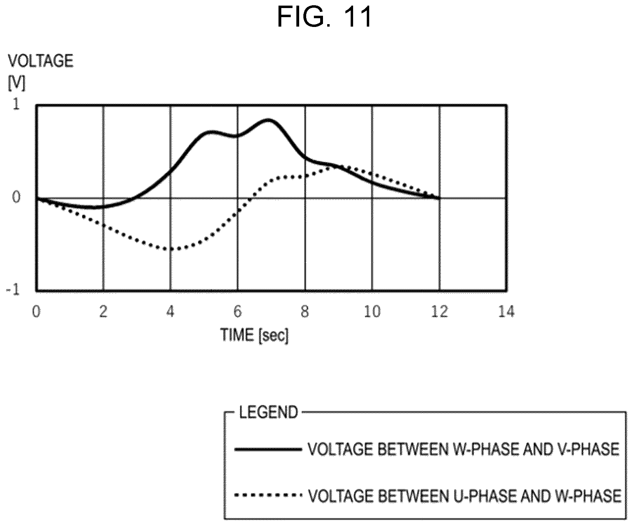

When the electrical angular velocity illustrated in FIG. 9 is supplied by the output shaft 33 being rotated by hand, the back electromotive force as illustrated in FIG. 8 is generated. Here, it is difficult to measure the back electromotive force by the voltmeter 21. Thus, in the present embodiment, the first acquisition unit 11 may measure a measurement line voltage by the voltmeter 21 instead of directly measuring the back electromotive force. Examples of the measurement line voltage include a voltage between the U-phase and the V-phase, a voltage between the W-phase and the V-phase, and a voltage between the U-phase and the W-phase. FIG. 11 is a diagram showing the time-series change in the measurement line voltage. In FIG. 11, the vertical axis represents voltage (V) and the horizontal axis represents time (second). In FIG. 11, the voltage between the W-phase and the V-phase and the voltage between the U-phase and the W-phase are shown. The measurement line voltage is an example of the "information related to the back electromotive force".

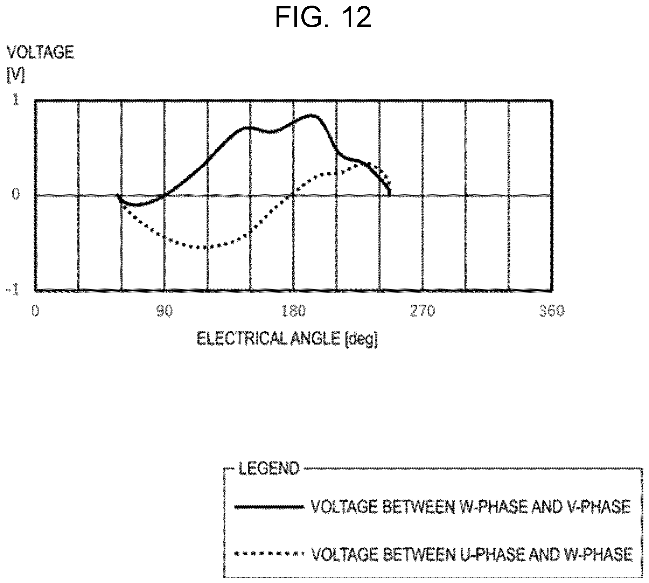

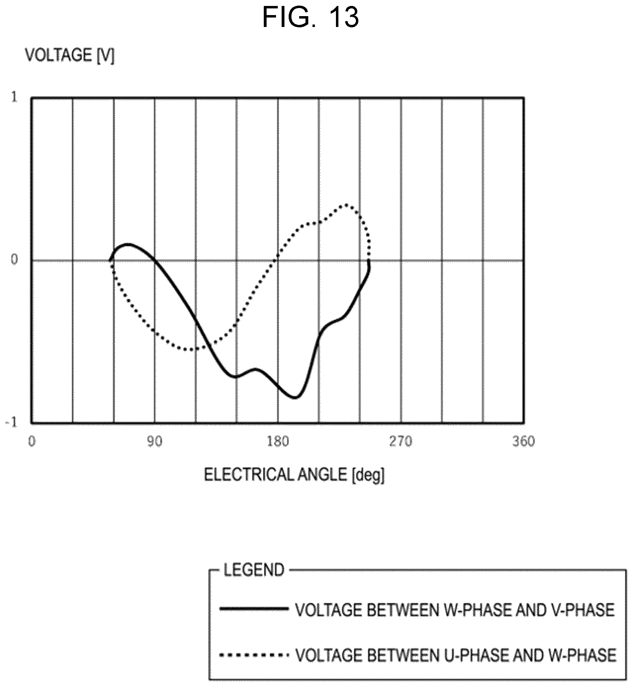

The estimation unit 13 can estimate the arrangement order of the U-phase coil 311, the V-phase coil 312, and the W-phase coil 313 based on a positive or negative of the other measurement line voltages at a zero cross point of a certain measurement line voltage. FIGS. 12 and 13 are diagrams each showing a correspondence relationship between the measurement line voltage and the electrical angle recognized by the servo driver 2. In FIGS. 12 and 13, the vertical axis represents voltage (V), and the horizontal axis represents electrical angle (degree). FIG. 12 illustrates a case where the arrangement order of the U-phase coil 311, the V-phase coil 312, and the W-phase coil 313, preset in the servo driver 2 matches the arrangement order of the U-phase coil 311, the V-phase coil 312, and the W-phase coil 313 in the motor 3. FIG. 13 illustrates a case where the arrangement order of the U-phase coil 311, the V-phase coil 312, and the W-phase coil 313, preset in the servo driver 2 is deferent from the arrangement order of the U-phase coil 311, the V-phase coil 312, and the W-phase coil 313 in the motor 3.

In the servo driver 2, for example, a correspondence relationship between the change in the measurement line voltage acquired by the first acquisition unit 11 and the electrical angle indicated by the feedback signal acquired by the second acquisition unit is stored in the storage unit 16. The correspondence relationship between the measurement line voltage and the electrical angle shown in FIGS. 12 and 13 is an example of a "first correspondence relationship".

In FIG. 12, the voltage between the U-phase and the W-phase is 0 V at the electrical angle of 180 degrees. The voltage between the W-phase and the U-phase at the electrical angle of 180 degrees is positive. Thus, the estimation unit 13 estimates that the arrangement order of the U-phase coil 311, the V-phase coil 312, and the W-phase coil 313, preset matches the arrangement order of the U-phase coil 311, the V-phase coil 312, and the W-phase coil 313 arranged in the motor 3. Here, the estimation unit 13 estimates that the U-phase coil 311, the V-phase coil 312, and the W-phase coil 313 are arranged in this order with respect to the direction in which the output shaft 33 is rotated by hand.

In FIG. 13, the voltage between the U-phase and the W-phase is 0 V at the electrical angle of 180 degrees. The voltage between the W-phase and the U-phase at the electrical angle of 180 degrees is negative. Thus, the estimation unit 13 estimates that the arrangement order of the U-phase coil 311, the V-phase coil 312, and the W-phase coil 313, preset is reversed to the arrangement order of the U-phase coil 311, the V-phase coil 312, and the W-phase coil 313 arranged in the motor 3. Here, the estimation unit 13 estimates that the U-phase coil 311, the W-phase coil 313, and the V-phase coil 312 are arranged in this order with respect to the direction in which the output shaft 33 is rotated by hand.

Thus, when a certain measurement line voltage is 0 and the other measurement line voltage is positive, the estimation unit 13 estimates that the arrangement order of the U-phase coil 311, the V-phase coil 312, and the W-phase coil 313, preset matches the arrangement order of the U-phase coil 311, the V-phase coil 312, and the W-phase coil 313, arranged in the motor 3. When a certain measurement line voltage is 0 and the other measurement line voltage is negative, the estimation unit 13 estimates that the arrangement order of the U-phase coil 311, the V-phase coil 312, and the W-phase coil 313, preset matches the arrangement order of the U-phase coil 311, the V-phase coil 312, and the W-phase coil 313 arranged in the motor 3.

Subsequently, the estimation unit 13 estimates the encoder offset. Here, it is assumed that the estimation unit 13 estimates that the U-phase coil 311, the V-phase coil 312, and the W-phase coil 313 are arranged in this order with respect to the direction in which the output shaft 33 is rotated by hand. The zero cross point of the voltage between the U-phase and the W-phase in FIG. 12 is at the electrical angles of 60 degrees and 180 degrees. In FIG. 12, the voltage between the U-phase and the W-phase decreases at a point at which the electrical angle is 60 degrees. In addition, in FIG. 12, the voltage between the U-phase and the W-phase increases at a point at which the electrical angle is 180 degrees. That is, a rate of change in the voltage between the U-phase and the W-phase at the electrical angle of 180 degrees is positive.

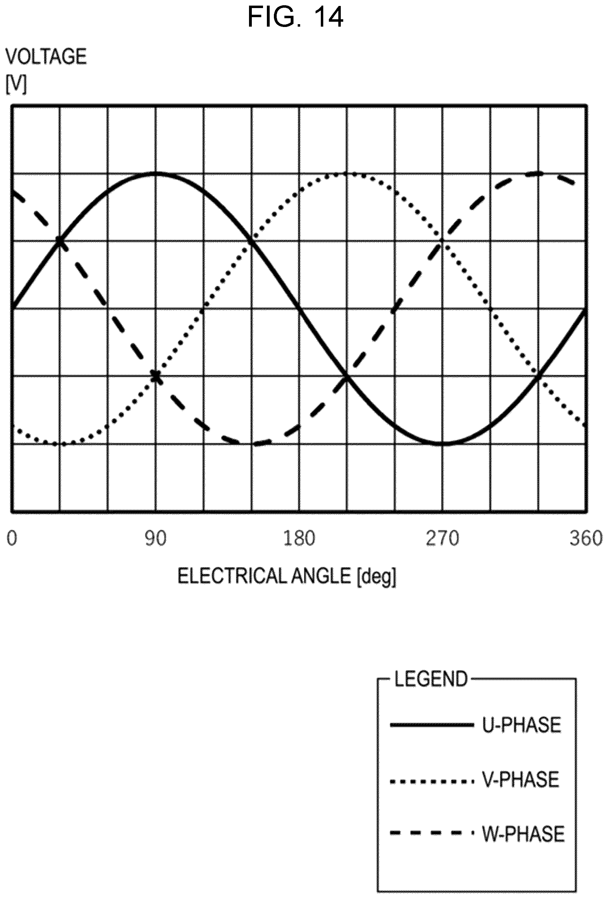

FIG. 14 is a diagram showing a correspondence relationship between a three-phase voltage measured from a neutral point and the electrical angle. It can be said that FIG. 14 shows a true value of the electrical angle. The correspondence relationship between the three-phase voltage and the electrical angle shown in FIG. 14 may be stored in advance in the storage unit 16 of the servo driver 2, for example. In FIG. 14, it can be understood that the voltage of the U-phase and the voltage of the W-phase are equal to each other when the electrical angle is 30 degrees and 210 degrees. In FIG. 14, at an electrical angle of 30 degrees, the voltage between the U-phase and the W-phase tends to decrease (the rate of change is negative), and at an electrical angle of 180 degrees, the voltage between the U-phase and the W-phase tends to increase (the rate of change is positive).

The point at which the voltage of the U-phase and the voltage of the W-phase are equal to each other corresponds to, for example, a zero cross point of the voltage between the U-phase and the W-phase in FIG. 14. Among the zero cross points of the voltage between the U-phase and the W-phase shown in FIG. 14, the voltage between the U-phase and the W-phase at the electrical angle of 60 degrees tends to decrease, and the voltage between the U-phase and the W-phase at the electrical angle of 180 degrees tends to increase. The correspondence relationship between the three-phase voltage and the electrical angle shown in FIG. 14 is an example of a "second correspondence relationship".

That is, it can be understood that, among the zero cross points of the voltage between the U-phase and the W-phase shown in FIG. 12, the zero cross point at the electrical angle of 60 degrees corresponds to the electrical angle of 30 degrees in FIG. 14. Further, it can be understood that among the zero cross points of the voltage between the U-phase and the W-phase shown in FIG. 12, the zero cross point at the electrical angle of 180 degrees corresponds to the electrical angle of 210 degrees in FIG. 14.

Here, the encoder offset to be set in the servo driver 2 can be calculated by subtracting the electrical angle assumed by the servo driver 2 from the true value of the electrical angle. In the present embodiment, for example, at a point at which the servo driver 2 assumes that the electrical angle is 180 degrees, the true value of the electrical angle is 210 degrees. Thus, the estimation unit 13 can calculate the electrical angle of 30 degrees as the encoder offset by subtracting the electrical angle of 180 degrees assumed by the servo driver 2 from 210 degrees which is the true value of the electrical angle.

The setting unit 14 causes the servo driver 2 to store each piece of information related to the motor 3 estimated by the estimation unit 13 in the storage unit 16. When the information related to the motor 3 is stored in the storage unit 16, the servo driver 2 can perform servo control of the motor 3 by using the information stored in the storage unit 16.

The control unit 15 performs feedback control of the motor 3 according to the command signal from the PLC 1 by using each piece of information related to the motor 3 stored in the storage unit 16 by the setting unit 14. The control unit 15 is an example of a "control unit".

The storage unit 16 stores information acquired by the first reception unit 11 and the second reception unit 12 and information related to processing performed by the first reception unit 11, the second reception unit 12, the estimation unit 13, the setting unit 14, and the control unit 15. The storage unit 16 is, for example, an EEPROM. The storage unit 16 is an example of a "storage unit".

< Processing Flow >

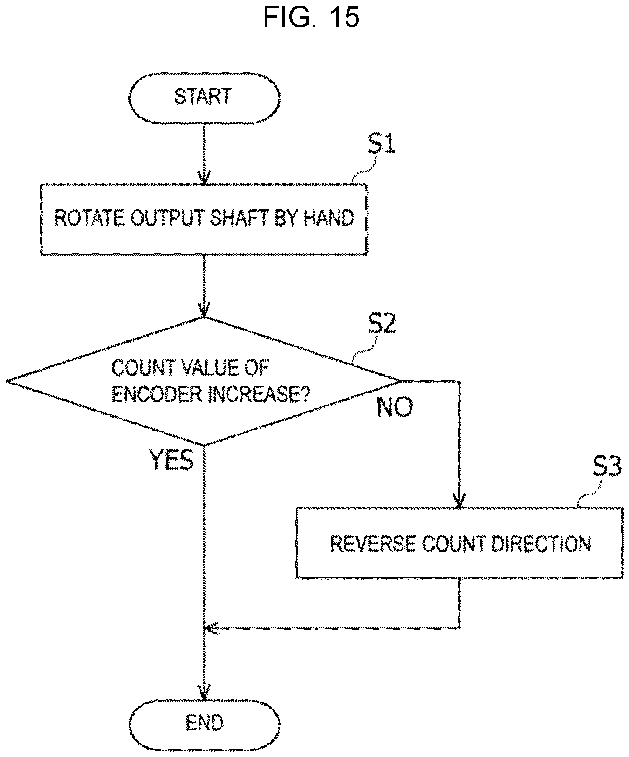

FIG. 15 is a diagram illustrating an example of processing flow of processing of estimating the count-up direction of the encoder by the estimation unit 13. Hereinafter, with reference to FIG. 15, an example of processing of estimating the count-up direction of the encoder by the estimation unit 13 will be described.

In S1, the output shaft 33 of the motor 3 is rotated by hand toward a rotation direction desired to be set as the positive direction by the user of the servo system 100. In S2, the second reception unit 12 receives the feedback signal from the encoder 32. The estimation unit 13 determines whether a count value of the encoder indicating the rotation direction of the output shaft 33 indicates the positive direction based on the feedback signal received by the second reception unit 12. If the positive direction is indicated (YES in S2), then the count-up direction is correctly set in the servo driver 2, and thus the processing is ended. If the direction is not the positive direction (if the direction is negative) (NO in S2), then the processing proceeds to S3. The count value of the encoder indicating the rotation direction of the output shaft 33 is an example of a "parameter indicating the rotation direction of the output shaft".

In S3, the estimation unit 13 detects that the count-up direction stored in advance in the storage unit 16 of the servo driver 2 is reversed to the count-up direction of the encoder 32. The setting unit 14 reverses the count-up direction stored in advance in the storage unit 16 and causes the storage unit 16 to store thereof. The setting unit 14 may cause the storage unit 16 to store information indicating that the count-up direction is reverse to the direction stored in advance in the storage unit 16. For example, when the information indicating the reverse direction is stored in the storage unit 16, the control unit 15 may count the rotation amount of the output shaft 33 on the assumption that the rotation amount of the output shaft 33 has increased by a decreased amount in the rotation amount of the output shaft 33 indicated by the feedback signal from the encoder 32. The information indicating the reverse direction is an example of "first information".

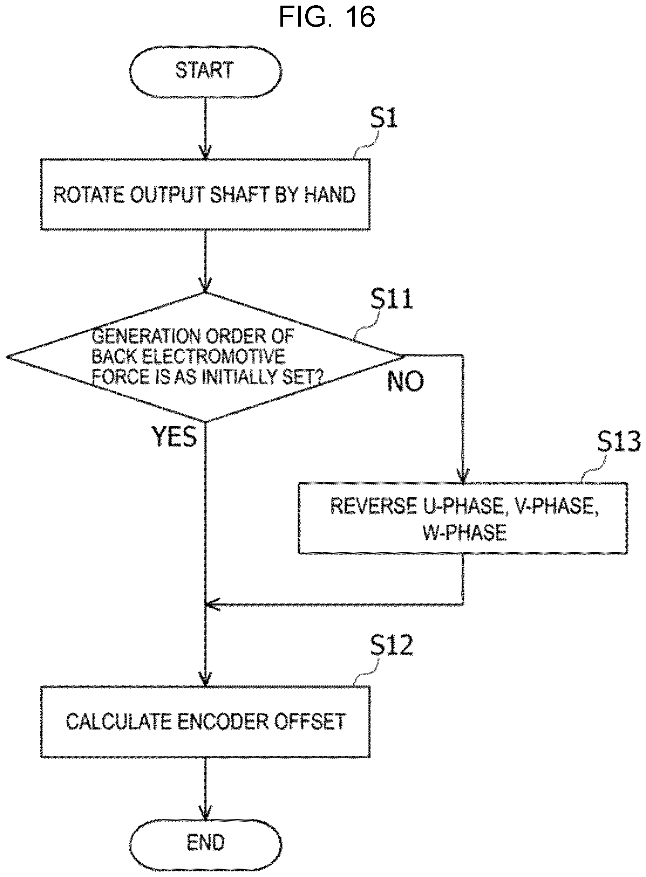

FIG. 16 is a diagram illustrating an example of processing flow of processing of estimating the offset of the encoder by the estimation unit 13. In FIG. 16, the same processing as that in FIG. 15 is denoted by the same reference sign, and a description thereof will be omitted. Hereinafter, with reference to FIG. 16, an example of processing of estimating the offset of the encoder by the estimation unit 13 will be described.

In S11, the first reception unit 11 receives the back electromotive forces from the motor 3. The estimation unit 13 estimates the arrangement order of the U-phase coil 311, the V-phase coil 312, and the W-phase coil 313 based on a positive or negative of the other measurement line voltage at the zero cross point of a certain measurement line voltage. If the estimated arrangement order matches the arrangement order preset in the servo driver 2 (YES in S11), the arrangement order of the U-phase, the V-phase, and the W-phase is correctly set in the servo driver 2, and then the processing proceeds to S12. If the estimated arrangement order does not match the arrangement order preset in the servo driver 2 (NO in S11), then the processing proceeds to S13.

In S12, the estimation unit 13 calculates the encoder offset of the encoder 32 for correcting the deviation between the dq-axis of the servo driver 2 and the dq-axis of the motor 3. The setting unit 14 causes the storage unit 16 to store the calculated encoder offset.

In S13, the setting unit 14 changes the order of the U-phase, the V-phase, and the W-phase stored in advance in the storage unit 16 of the servo driver 2 to the reverse order and causes the storage unit 16 to store the reverse order. That is, the setting unit 14 causes the storage unit 16 to store the order of the U-phase, the V-phase, and the W-phase according to the generation order of the back electromotive forces acquired in S11.

< Advantageous Effects of Embodiment >

In the present embodiment, information related to the motor 3 is acquired and stored in the storage unit 16 by rotating the output shaft 33 by hand in the desired direction of the user. The control unit 15 can control the motor 3 by using the information stored in the storage unit 16. That is, according to the present embodiment, the information related to the motor 3 which is the three-phase AC motor can be stored in the storage unit 16 by a simple method.

In the present embodiment, for example, the arrangement order of the U-phase coil 311, the V-phase coil 312, and the W-phase coil 313 is estimated based on the time-series change in the back electromotive forces generated by rotating the output shaft 33 by hand, and the estimated arrangement order is stored in the storage unit 16. The control unit 15 can supply currents to the U-phase coil 311, the V-phase coil 312, and the W-phase coil 313 and can drive the motor 3 by referencing to the arrangement order stored in the storage unit 16.

In the present embodiment, the estimation unit 13 determines whether the count value of the encoder indicating the rotation amount of the output shaft 33 has increased based on the feedback signal when the output shaft 33 is rotated by hand. When the count value decreases, the estimation unit 13 detects that the count-up direction stored in advance in the storage unit 16 is reversed to the count-up direction of the encoder 32. Then, the setting unit 14 can match the desired direction with the count-up direction by reversing the count-up direction stored in advance in the storage unit 16. The setting unit 14, the setting unit 14 may cause the storage unit 16 to store the information indicating that the count-up direction is reversed to the direction stored in advance in the storage unit 16.

In the present embodiment, the encoder offset for correcting the deviation between the electrical angle of the motor 3 and the origin of the encoder 32 is estimated by the estimation unit 13. Thus, according to the present embodiment, even when a deviation occurs between the origin of the encoder 32 and 0 degrees of the electrical angle of the motor 3, the servo driver 2 can correct the deviation to control the motor 3. When the electrical angle of 0 degrees is present, for example, at a position of 10000 pulses, the servo driver 2 may set 10000 pulses as the encoder offset and control the motor 3.

< First Modified Example >

In the embodiment, the arrangement order of the U-phase coil 311, the V-phase coil 312, and the W-phase coil 313 is estimated using the measurement line voltage generated when the output shaft 33 is rotated by hand. However, the arrangement order of the U-phase coil 311, the V-phase coil 312, and the W-phase coil 313 can also be estimated using, for example, a current generated when the output shaft 33 is rotated by hand. In a first modified example, processing of estimating the arrangement order of the U-phase coil 311, the V-phase coil 312, and the W-phase coil 313 by using the current generated when the output shaft 33 is rotated by hand will be described.

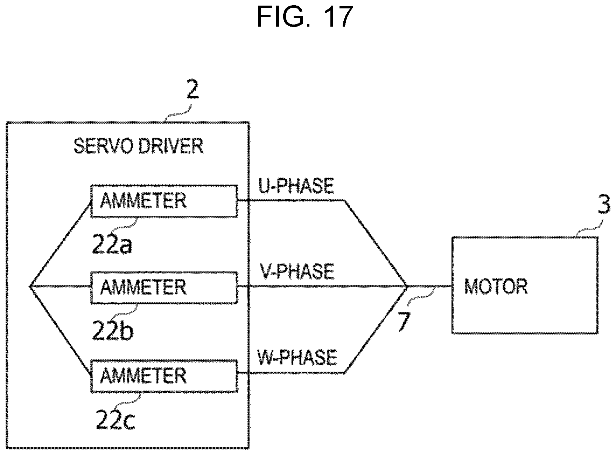

FIG. 17 is a diagram schematically illustrating measurement of a current input via the power line 7 from the motor 3 whose output shaft 33 is rotated by hand. The servo driver 2 includes ammeters 22a, 22b, and 22c. A current value of the U-phase, a current value of the V-phase, and a current value of the W-phase are measured by the voltmeter 22a, the ammeter 22b, and the ammeter 22c, respectively. When the current value is measured, for example, the U-phase, the V-phase, and the W-phase are shortcircuited in the servo driver 2.

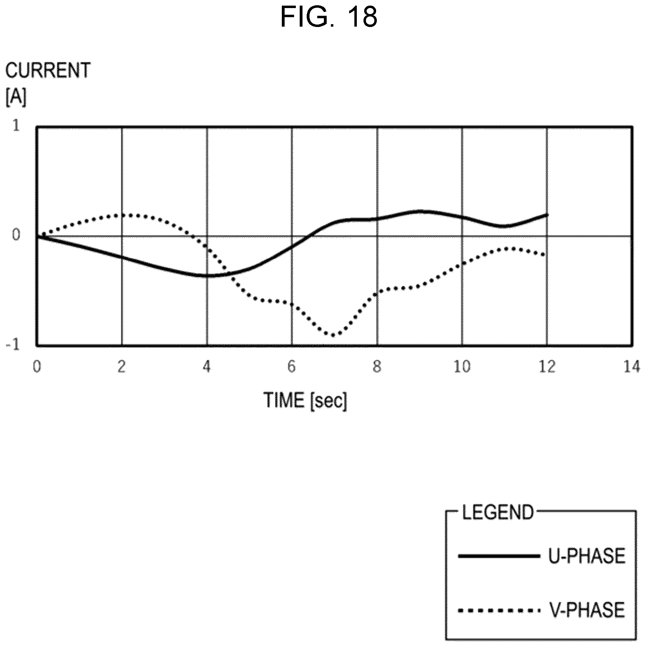

Here, it is assumed that the electrical angular velocity illustrated in FIG. 9 is supplied by rotating the output shaft 33 by hand. FIG. 18 is a diagram showing current values generated when the electrical angular velocity illustrated in FIG. 9 is supplied. In FIG. 18, the vertical axis represents current (A) and the horizontal axis represents time (second).

In the above equation (1), since $V_d$ and $V_q$ are 0, the following equation (3) is established.
[Equation 3]

$$\begin{bmatrix} 0 \\ 0 \end{bmatrix} = \begin{bmatrix} R + pL_d & -\omega L_q \\ \omega L_d & R + pL_q \end{bmatrix} \begin{bmatrix} i_d \\ i_q \end{bmatrix} + \begin{bmatrix} 0 \\ \omega K_e \end{bmatrix} \quad \cdot \cdot \cdot \quad \text{EQUATION (3)}$$

When the equation (3) is approximated and the differential term is regarded as 0, the following equation (4) can be obtained. Since $\omega^2$ is sufficiently small because the output shaft 33 is rotated by hand, the term $i_d$ can be ignored.
[Equation 4]

$$\begin{bmatrix} i_d \\ i_q \end{bmatrix} = \frac{1}{R^2 + \omega^2 L_d L_q} \begin{bmatrix} R & \omega L_q \\ -\omega L_d & R \end{bmatrix} \begin{bmatrix} 0 \\ \omega K_e \end{bmatrix} \quad \cdot \ \cdot \ \cdot \quad \text{EQUATION (4)}$$

The arrangement order of the U-phase coil 311, the V-phase coil 312, and the W-phase coil 313 in the motor 3 and the encoder offset to be set in the servo driver 2 can also be estimated using the current similarly to the method described using the voltage with reference to FIGS. 12 and 13. For example, in FIG. 18, the estimation unit 13 can estimate the arrangement order of the U-phase coil 311, the V-phase coil 312, and the W-phase coil 313 of the motor 3 based on a positive or negative of the current value of the V-phase at the zero cross point of the current of the U-phase. The estimation unit 13 can estimate the encoder offset based on, for example, a positive or negative of the rate of change in the current value of the U-phase at the zero cross point of the current of the U-phase. As an example, the estimation unit 13 can estimate that when the rate of change in the current value of the U-phase at the zero cross point of the current of the U-phase is positive, the direction of the q-axis current is 270 degrees and the electrical angle (angle of the d-axis) is 180 degrees.

The above-described embodiment and modification can be combined.

< Supplement 1 >

A control device (2) that controls a three-phase AC motor (3) including an encoder (32) that outputs a feedback signal indicating a rotation state of an output shaft (33), a U-phase coil (311), a V-phase coil (312), and a W-phase coil (313), the control device (2) including:

a first acquisition unit (11) configured to acquire information related to back electromotive forces generated in the U-phase coil (311), the V-phase coil (312), and the W-phase coil (313) due to the output shaft (33) being rotated in a desired direction by an external force;
a second acquisition unit (12) configured to acquire, from the encoder (32), the feedback signal including information related to rotation of the output shaft (33) rotated by the external force; and
a control unit (13, 15) configured to estimate information related to control of the three-phase AC motor (3) based on the information related to the back electromotive forces and the feedback signal and to control the three-phase AC motor (3) by using the estimated information related to control of the three-phase AC motor (3).

REFERENCE SIGNS LIST

1 PLC
2 Servo driver
3 Motor
7 Power line
8 Encoder cable
11 First reception unit
12 Second reception unit
13 Estimation unit
14 Setting unit
15 Control unit
16 Storage unit
21 Voltmeter
22a, 22b, 22c Ammeter
31 Motor body
32 Encoder
33 Output shaft
100 Servo system
310 Rotor
311 U-phase coil
312 V-phase coil
313 W-phase coil
320 Encoder origin
321 Encoder count-up direction

500 Arrow

## Claims

1. A control device configured to control a three-phase AC motor including an encoder configured to output a feedback signal indicating a rotation state of an output shaft, a U-phase coil, a V-phase coil, and a W-phase coil, the control device comprising:

   a first acquisition unit configured to acquire information related to back electromotive forces generated in the U-phase coil, the V-phase coil, and the W-phase coil due to the output shaft being rotated in a desired direction by an external force;

   a second acquisition unit configured to acquire, from the encoder, the feedback signal including information related to rotation of the output shaft rotated by the external force; and

   a control unit configured to estimate information related to control of the three-phase AC motor based on the information related to the back electromotive forces and the feedback signal, and to control the three-phase AC motor by using the estimated information related to control of the three-phase AC motor.

2. The control device according to claim 1, wherein
   the control unit:

   estimates an arrangement order of the U-phase coil, the V-phase coil, and the W-phase coil based on the information related to the back electromotive forces; and

   controls the three-phase AC motor by using the estimated arrangement order of the U-phase coil, the V-phase coil, and the W-phase coil.

3. The control device according to claim 2, wherein

   the information related to the back electromotive forces includes a first correspondence relationship between a voltage and an electrical angle between any two phases among a U-phase, a V-phase, and a W-phase, and the control unit:

   acquires a positive or negative of a rate of a change in the voltage between the two phases when the voltage between the two phases is 0 in the first correspondence relationship, and a first electrical angle when the voltage between the two phases is 0;

   determines an offset configured to correct a deviation between an electrical angle of the three-phase AC motor and an origin of the encoder based on a second correspondence relationship between a voltage and an electrical angle of each of the U-phase, the V-phase, and the W-phase stored in advance in a storage unit, the positive or negative of the rate of the change in the voltage and the first electrical angle acquired, and the estimated arrangement order of the U-phase coil, the V-phase coil, and the W-phase coil; and

   controls the three-phase AC motor by also using the determined offset.

4. The control device according to claim 2, wherein

   the information related to the back electromotive forces includes a third correspondence relationship between a current value and an electrical angle between any two phases of a U-phase, a V-phase, and a W-phase, and the control unit:

   acquires a positive or negative of a rate of a change in the current value when the current value is 0 in the third correspondence relationship, and a second electrical angle when the current value is 0;

   determines an offset configured to correct a deviation between an electrical angle of the three-phase AC motor and an origin of the encoder based on a fourth correspondence relationship between the current value and the electrical angle of each of the U-phase, the V-phase, and the W-phase stored in advance in a storage unit, the positive or negative of the rate of the change in the current value and the first electrical angle acquired, and the estimated arrangement order of the U-phase coil, the V-phase coil, and the W-phase coil; and

   controls the three-phase AC motor by also using the determined offset.

**5.** The control device according to any one of claims 1 to 4, wherein

the information related to control of the three-phase AC motor includes a parameter indicating a rotational direction of the output shaft notified through the feedback signal, and
the control unit controls the three-phase AC motor:

by causing the storage unit to store first information when the output shaft is rotated in the desired direction and the parameter indicating the rotational direction of the output shaft notified through the feedback signal indicates a negative direction, and
determining that the output shaft is rotated in a direction opposite to the rotational direction of the output shaft notified through the feedback signal when the first information is stored in the storage unit.

FIG. 1

FIG. 2

ENCODER COUNT-UP DIRECTION

# FIG. 3

ENCODER COUNT-UP DIRECTION

ENCODER ORIGIN

U-PHASE

V-PHASE

W-PHASE

321

320

# FIG. 4

U-PHASE

W-PHASE

ENCODER ORIGIN

320

V-PHASE

321

ENCODER COUNT-UP DIRECTION

# FIG. 5

ENCODER ORIGIN

320

321

U-PHASE

W-PHASE

V-PHASE

ENCODER COUNT-UP DIRECTION

FIG. 6

SERVO DRIVER

# FIG. 7

SERVO DRIVER    2

| FIRST RECEPTION UNIT | 11 |
| SECOND RECEPTION UNIT | 12 |
| ESTIMATION UNIT | 13 |
| SETTING UNIT | 14 |
| CONTROL UNIT | 15 |
| STORAGE UNIT | 16 |

FIG. 8

BACK ELECTROMOTIVE FORCE [V]

# FIG. 9

ELECTRICAL ANGULAR VELOCITY
[deg/sec]

TIME [sec]

# FIG. 10

# FIG. 11

VOLTAGE [V]

TIME [sec]

LEGEND

——— VOLTAGE BETWEEN W-PHASE AND V-PHASE

· · · · · · · · VOLTAGE BETWEEN U-PHASE AND W-PHASE

# FIG. 12

LEGEND

——————— VOLTAGE BETWEEN W-PHASE AND V-PHASE

········· VOLTAGE BETWEEN U-PHASE AND W-PHASE

# FIG. 13

VOLTAGE [V]

ELECTRICAL ANGLE [deg]

LEGEND

———— VOLTAGE BETWEEN W-PHASE AND V-PHASE

·········· VOLTAGE BETWEEN U-PHASE AND W-PHASE

# FIG. 14

VOLTAGE
[V]

ELECTRICAL ANGLE [deg]

┌─ LEGEND ─────────

────────── U-PHASE

·········· V-PHASE

──── ── · W-PHASE

# FIG. 15

```
        ┌─────────┐
        │  START  │
        └─────────┘
             │
             ▼                              S1
  ┌───────────────────────────────┐
  │  ROTATE OUTPUT SHAFT BY HAND   │
  └───────────────────────────────┘
             │
             ▼                              S2
          ╱────────────────╲
         ╱   COUNT VALUE OF  ╲      NO
        ╱  ENCODER INCREASE?  ╲──────────┐
         ╲                   ╱           │
          ╲─────────────────╱            │
       YES        │                      ▼              S3
                  │         ┌──────────────────────────┐
                  │         │  REVERSE COUNT DIRECTION  │
                  │         └──────────────────────────┘
                  │                      │
                  │◄─────────────────────┘
                  │
                  ▼
             ┌─────────┐
             │   END   │
             └─────────┘
```

FIG. 16

```
        ┌─────────────┐
        │    START    │
        └──────┬──────┘
               │
               ▼                          S1
    ┌──────────────────────────────┐
    │  ROTATE OUTPUT SHAFT BY HAND  │
    └──────────────┬───────────────┘
                   │
                   ▼                      S11
          ╱─────────────────╲
         ╱ GENERATION ORDER OF╲
        ╱  BACK ELECTROMOTIVE  ╲──── NO ────┐
        ╲ FORCE IS AS INITIALLY╱            │
         ╲      SET?          ╱             │
          ╲─────────────────╱              ▼         S13
               │                  ┌─────────────────────────┐
              YES                 │ REVERSE U-PHASE, V-PHASE,│
               │                  │         W-PHASE          │
               │                  └────────────┬────────────┘
               │◄──────────────────────────────┘
               │
               ▼                      S12
    ┌──────────────────────────────┐
    │   CALCULATE ENCODER OFFSET    │
    └──────────────┬───────────────┘
                   │
                   ▼
        ┌─────────────┐
        │     END     │
        └─────────────┘
```

FIG. 17

# FIG. 18

| | INTERNATIONAL SEARCH REPORT | International application No. |
|---|---|---|
| | | **PCT/JP2023/008342** |

**A. CLASSIFICATION OF SUBJECT MATTER**

***H02P 23/14***(2006.01)i
FI: H02P23/14

According to International Patent Classification (IPC) or to both national classification and IPC

**B. FIELDS SEARCHED**

Minimum documentation searched (classification system followed by classification symbols)

H02P23/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2002-354876 A (TOYOTA MOTOR CORP.) 06 December 2002 (2002-12-06) paragraphs [0037]-[0052], [0069], fig. 1-5 | 1 |
| Y | | 2, 5 |
| A | | 3-4 |
| Y | JP 2014-138530 A (TOYOTA MOTOR CORP.) 28 July 2014 (2014-07-28) paragraph [0064] | 2, 5 |
| Y | WO 2017/002257 A1 (FUJI MACHINE MFG. CO., LTD.) 05 January 2017 (2017-01-05) paragraphs [0012], [0015] | 5 |
| A | JP 2013-179771 A (JTEKT CORP.) 09 September 2013 (2013-09-09) paragraphs [0020]-[0058], fig. 1-5 | 1-5 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 April 2023** | **16 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/008342**

| Patent document cited in search report | | | Publication date (day/month/year) | Patent family member(s) | | | Publication date (day/month/year) |
|---|---|---|---|---|---|---|---|
| JP | 2002-354876 | A | 06 December 2002 | (Family: none) | | | |
| JP | 2014-138530 | A | 28 July 2014 | US<br>paragraph [0096]<br>EP<br>CN | 2014/0207335<br><br>2757023<br>103944475 | A1<br><br>A2<br>A | |
| WO | 2017/002257 | A1 | 05 January 2017 | US<br>paragraphs [0014], [0017]<br>EP<br>CN | 2018/0191275<br><br>3319226<br>107820673 | A1<br><br>A1<br>A | |
| JP | 2013-179771 | A | 09 September 2013 | (Family: none) | | | |

Form PCT/ISA/210 (patent family annex) (January 2015)

**EP 4 482 022 A1**

REFERENCES CITED IN THE DESCRIPTION

**Patent documents cited in the description**

- JP 2018061327 A
- JP 2018191422 A
- JP 2010057302 A